# FASCICULE DE BREVET EUROPEEN

(11) **EP 2 809 712 B1**
(45) Date de publication et mention de la délivrance du brevet: **14.11.2018**
(21) Numéro de dépôt: 13704741.1
(22) Date de dépôt: 04.02.2013
(51) Int. Cl.: C08J 7/12, C08J 7/14, C08J 5/18

(54) **FILM BARRIÈRE À EXPANSION MOLÉCULAIRE SOUS CONTRAINTE**
SPERRFILM MIT MOLEKULARER EXPANSION UNTER DRUCK
BARRIER FILM WITH MOLECULAR EXPANSION UNDER STRAIN

(30) Priorité: 02.02.2012 FR 1250992
(43) Date de publication de la demande: 10.12.2014
(73) Titulaire: Centre National de la Recherche Scientifique (C.N.R.S.), 75016 Paris (FR); Centre Technique Du Papier, 38610 Gieres (FR); Fraunhofer-Gesellschaft zur Förderung der angewandten Forschung e.V., 80636 München (DE)
(72) Inventeur: SAMAIN, Daniel, F-38240 Meylan (FR); STINGA, Camélia, F-38100 Grenoble (FR); GUERIN, David, F-63400 Chamaliere (FR); SCHMID, Markus, 85406 Zolling (DE); NOLLER, Klaus, 84184 Tiefenbach/ast (DE)
(74) Mandataire: Lavoix
(86) Numéro de dépôt international: PCT/EP2013/052156
(87) Numéro de publication internationale: WO 2013/113927

(56) Documents cités:
- FR-A1- 2 925 910
- BIVER C ET AL: "Microphase separation and wetting properties of palmitate-graft-poly(vinyl alcohol) films", MACROMOLECULES, AMERICAN CHEMICAL SOCIETY, WASHINGTON, DC; US, vol. 35, 1 janvier 2002 (2002-01-01), pages 2552-2559, XP002479530, ISSN: 0024-9297, DOI: 10.1021/MA010526J [extrait le 2002-02-23]
- MICHAEL LEVITT ET AL: "Aromatic rings act as hydrogen bond acceptors", JOURNAL OF MOLECULAR BIOLOGY, vol. 201, no. 4, 1 juin 1988 (1988-06-01), pages 751-754, XP055055648, ISSN: 0022-2836, DOI: 10.1016/0022-2836(88)90471-8

## Description

La présente invention se rapporte à un procédé de traitement d'un substrat solide pour former un film barrière à base de polyols linéaires fixés sur ce substrat et subséquemment greffé avec des acides gras.

Nous avons montré qu'il était possible de conférer des propriétés hydrophobes supérieures à la surface d'un substrat solide en recouvrant ce dernier par une couche d'alcool polyvinylique (PVA) puis en faisant réagir la surface de cette dernière avec des acides gras à longues chaines selon le procédé de chromatogénie (EP 1007 202, WO2009/083525). Nous avons notamment montré que, de manière inattendue, la réaction ne se limitait pas à la surface même de la couche de PVA mais qu'elle pénétrait légèrement en profondeur pour former une mince pellicule de PVA totalement acylé. Nous avons également montré que les propriétés barrière du matériau ainsi obtenu étaient fonction du poids moléculaire des chaînes de PVA. Nous avons montré en effet que des poids moléculaires trop faibles conduisaient à une per-acylation des chaînes de PVA entraînant leur désolidarisation du socle de PVA sous-jacent et une décroissance des propriétés barrière.

Ce phénomène s'explique par le fait que la cohésion des molécules d'alcool polyvinylique entre elles est due à l'établissement de liaisons hydrogènes entre les fonctions hydroxyles de ces molécules. Il est clair que ces liaisons hydrogènes ne peuvent plus s'établir dès lors que les hydroxyles ont été dérivés par des acides gras. Seules des molécules de PVA possédant des poids moléculaires suffisamment élevés peuvent rester associées au socle de PVA sous-jacent. En effet dans ce cas, la longueur de la molécule lui permet de présenter une partie insérée profondément dans la sous couche de PVA à l'abri de la réaction d'acylation. Par ailleurs la partie supérieure qui subit la réaction d'acylation voit son poids moléculaire et donc son volume augmenter considérablement. Il se crée ainsi une gêne stérique qui contribue à la performance des propriétés barrières hydrophobes. Les interactions fortes entre les segments de PVA acylés qui en résultent sont, à l'évidence, directement responsables de l'efficacité des propriétés barrières qui est observée. En particulier, les éléments qui nuisent à ces interactions fortes comme la présence de charges minérales hydrophiles au sein de la couche de PVA conduisent à des propriétés barrières à l'eau dégradées.

La présente invention se propose d'étendre le champ d'application de la réaction d'acylation entre les molécules d'alcool polyvinylique et les acides gras à longues chaînes en démontrant que cette réaction peut aussi avoir lieu non seulement lorsque les molécules de PVA sont associées entre elles par des liaisons hydrogènes mais également lorsqu'elles sont fixées de façon stable à un substrat solide par des liaisons fortes non sensibles à la réaction d'acylation.

Ce que nous avons en effet découvert de façon inattendue c'est que l'association de molécules de PVA à un substrat solide par l'intermédiaire de liaisons fortes comme des liaisons covalentes ou poly-électrolytiques (ou poly-électrostatiques) ne compromettaient pas la réactivité systémique des molécules de PVA vis-à-vis de l'acylation. Symétriquement, nous avons aussi vérifié que la réaction de greffage quantitative des hydroxyles présents sur les chaines de PVA ainsi liées au substrat ne remettait pas en cause la stabilité de la liaison d'ancrage.

Ce qui caractérise en effet la réaction entre les molécules de PVA liées entre elles par des liaisons hydrogènes et les acides gras dans des conditions de chromatogénie, c'est que la réaction pénètre à l'intérieur de la couche de PVA pour réagir avec l'ensemble des hydroxyles présents. Le fait que la réaction soit quantitative sur une certaine épaisseur est bien mis en évidence par l'analyse des spectres IR en ATR qui démontrent l'absence totale à l'intérieur de la couche acylée de bandes caractéristiques des hydroxyles. Ce que nous montrons dans la présente invention c'est que cette réactivité systémique surprenante des hydroxyles des molécules de PVA est également maintenue dans le cas où les molécules sont fixées de manière stable sur un substrat solide ce qui conduit nécessairement à une restriction encore plus importante de leur degré de liberté.

Cette grande réactivité est en effet très surprenante car il faut comprendre que la réaction d'acylation des hydroxyles des chaines de PVA conduit à une augmentation très importante de leur poids moléculaires (d'un facteur 10) ce qui peut faire apparaitre des gênes stériques importantes. Le fait d'ancrer les chaines de PVA par des liaisons fortes (et non plus comme précédemment par des liaisons faibles) augmente à l'évidence très fortement ces gênes stériques et il n'était pas du tout évident que les chaines de PVA ainsi ancrées puissent conserver leur réactivité vis-à-vis de la réaction de greffage des acides gras.

Ce que nous montrons également dans la présente invention c'est que ce mode de réalisation ne dépend plus, comme dans le cas des couches de PVA décrit dans le brevet précédent (WO2009/083525), de la longueur de la chaine de PVA. Il est donc possible de sélectionner la longueur de la chaine de PVA (notamment de bas poids moléculaires) en fonction des propriétés recherchées. Cette faculté d'utiliser des polymères hydroxylés de plus bas poids moléculaire sans altération des propriétés barrière, nous a également permis de montrer qu'il était possible d'utiliser d'autres familles de polymères ou d'oligomères hydroxylés linéaires tels que du sorbitol ou des oligomères du sorbitol. Les polymères hydroxylés cycliques comme l'amidon, beaucoup plus encombrés statistiquement ne sont pas utilisables pour l'invention.

La possibilité pour des polymères hydroxylés tels que le PVA de s'associer de manière stable à des substrats solides par des liaisons fortes, covalentes ou poly-électrolytiques (poly-électrostatiques) est par ailleurs bien connue de l'homme de l'art. Il existe de nombreux exemples où cette association est décrite (Liesene et al, 2005, Liesiene J, 2009, Fatehi P and Xiao H, 2010). Les molécules de PVA sont alors soit couplées au moyen d'un réactif de couplage soit modifiées chimiquement, de façon à permettre cette interaction (Moritani T and Kajitani K, 1997 ; Moritani T and Yamauchi J, 1998a et 1998b). Dans le cas d'un substrat solide possédant à sa surface des charges ioniques, les molécules de PVA vont présenter des charges de signes opposées (Liesene et al, 2005, Liesiene J, 2009). Dans le cas de substrats de nature silicique, les molécules de PVA vont présenter des fonctions silicates (Maruyama Hitoshi and Okaya Takuji, 1994a et 1994b) dans le cas de substrats de nature calcique, les molécules de PVA vont présenter des fonctions phosphates, dans le cas d'un substrat présentant des fonctions OH, les molécules de PVA sont par exemple fixées par couplage avec de l'épichlorhydrine etc.

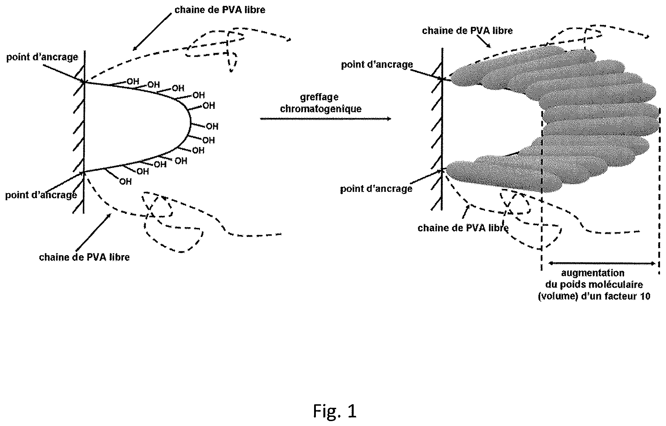

Le procédé selon l'invention comprend donc une étape dans laquelle des molécules de polymères hydroxylés vont être fixées de manière stable sur un substrat solide puis une étape dans laquelle le polymère hydroxylé couplé au substrat solide par des liaisons fortes est soumis directement à la réaction de greffage (figure 1). Cette réaction de greffage induit une augmentation considérable du poids moléculaire puisque le PVA présente par exemple une unité monomérique comprenant 2 carbones et un hydroxyle. Le greffage d'un acide gras comme l'acide stéarique par unité monomérique conduit à l'ajout de 18 carbones c'est-à-dire une augmentation du poids moléculaire d'un facteur 10. On peut ainsi considérer que les segments de molécules de polymères hydroxylés qui sont greffés par des acides gras comme l'acide stéarique « gonflent » d'un facteur 10. Les molécules de polymères étant fixées au substrat solide par des liaisons fortes n'ont pas la possibilité de se déplacer et les segments de molécules de polymères greffées par des acides gras doivent ainsi se déformer pour pouvoir gonfler dans un espace restreint. Si la densité de polymère fixé sur la surface est suffisante, il va alors se former un film continu par coalescence des segments de molécules de polymères greffées par des acides gras. Nous avons dénommé les films ainsi obtenus, « films barrière à expansion moléculaire sous contrainte ». La contrainte est représentée par la fixation des molécules de polymère hydroxylée sur la surface du substrat et l'expansion par leur « gonflement » due à leur réaction avec des acides gras.

Les procédés selon l'invention sont particulièrement intéressants lorsqu'on cherche à modifier des surfaces telles que celles des fibres textiles où la présence de polymère hydroxylé libre serait dommageable car introduisant d'une part une raideur et d'autre part n'étant pas adaptée à des conditions de lavage car soluble dans l'eau. Dans le cas des fibres textiles, la souplesse et la « main » sont des caractères essentiels de la qualité des produits tout autant que la capacité à subir un lavage en condition aqueuse. L'invention permet ainsi d'obtenir un gainage hydrophobe stable.

### RESUME

L'invention a pour objet un procédé de traitement d'un substrat solide comprenant les étapes suivantes :
a) On dispose d'un substrat solide couplé à un polyol linéaire par des liaisons covalentes ou ioniques, ledit polyol portant des groupements hydroxyles libres,
b) On greffe au moins un acide gras ayant une chaine aliphatique comprenant au moins 12 atomes de carbone sur ledit substrat solide couplé à un polyol par estérification d'au moins un groupement hydroxyle libre dudit polyol.

De préférence, le polyol est choisi parmi le PVA, le sorbitol, les alditols et les oligomères d'alditols.

Dans un mode de réalisation, le substrat solide et le polyol portent des groupements ionisables, le substrat solide et le polyol étant couplés par des liaisons ioniques entre lesdits groupements ionisables.

De préférence, le substrat solide porte un groupement anionique et le polyol est un PVA cationique ou le substrat solide porte un groupement cationique et le polyol est un PVA anionique.

Dans un autre mode de réalisation, le substrat solide porte des groupements silanol et le polyol est un PVA silicate, le substrat solide et le PVA silicate étant couplés par des liaisons siloxane.

Avantageusement, le substrat solide est du verre couplé à du PVA silicate.

Dans un autre mode de réalisation, le substrat est une fibre de rayonne couplée à du PVA par polymérisation radicalaire de polyacétate de vinyle sur ladite fibre suivie de la conversion du polyacétate de vinyle en PVA par hydrolyse.

De préférence, le substrat est une fibre de rayonne couplée à du PVA.

De préférence, le substrat est une fibre de rayonne couplée à du sorbitol.

Avantageusement, l'acide gras est choisi parmi l'acide stéarique, l'acide palmitique et l'acide béhénique.

Préférentiellement, le greffage de l'acide gras est effectué par estérification en phase hétérogène en présence d'un chlorure d'acide ayant une chaine aliphatique comprenant au moins 12 atomes de carbone.

L'invention a également pour objet un substrat solide traité susceptible d'être obtenu par le procédé selon l'invention.

L'invention se rapporte aussi à un procédé de fabrication et de traitement de papier ou de carton comprenant les étapes suivantes :
a) On dispose d'amidon cationique couplé par liaison covalente ou ionique à du PVA, ledit PVA portant des groupements hydroxyles libres ;
b) On procède à la fabrication de papier ou de carton par floculation de fibres de cellulose en présence de l'amidon cationique couplé à du PVA de l'étape précédente pour fabriquer du papier ou du carton comprenant de l'amidon cationique couplé à du PVA ;
c) On greffe au moins un acide gras ayant une chaine aliphatique comprenant au moins 12 atomes de carbone sur ledit substrat papier ou carton par estérification d'au moins un groupement hydroxyle libre dudit PVA.

De préférence, le greffage de l'acide gras est effectué par estérification en phase hétérogène en présence d'un chlorure d'acide ayant une chaine aliphatique comprenant au moins 12 atomes de carbone.

Un autre objet de l'invention est un papier ou un carton obtenu par le procédé selon l'invention.

### DESCRIPTION DETAILLEE DE l'INVENTION

L'invention a pour objet le traitement de substrats solides pour leur conférer des propriétés barrières et en particulier des propriétés barrières à l'eau, au gaz, aux graisses et à la vapeur d'eau.

L'invention permet le traitement de substrats solides couplés à un polyol dans lesquels le polyol conserve des groupements hydroxyles libres. Le couplage de polyols sur un substrat solide est par ailleurs effectué selon des techniques connues de l'homme du métier. Le traitement de ces substrats couplés à un polyol est réalisé par un traitement de surface par greffage d'acides gras par les techniques de chromatogénie décrites dans le brevet EP 1007202 et la demande internationale WO2009/083525.

Tous types de substrats solides peuvent être traités par les procédés selon la présente invention. Par substrat solide on entend tout substrat, support, matériau ou objet pouvant être couplé à un polyol. Pratiquement tous les matériaux organique ou inorganique peuvent être couplés à un polyol en utilisant des techniques bien connues de l'homme de l'art.

Dans un mode de réalisation préféré, le substrat solide est une fibre textile telle que les fibres de rayonne, les fibres à base de cellulose I et les fibres synthétiques.

Dans un autre mode de réalisation, le substrat est choisi parmi les substrats solides minéraux comprenant des groupements silanol. Il s'agit notamment des substrats solides comprenant de la silice (Verre, quartz, les particules d'argile comme le talc, la montmorillonite ou des argiles synthétiques comme la laponite).

Dans un autre mode de réalisation, le substrat solide est une fibre papetière comme par exemple les fibres de cellulose.

En particulier, l'invention se rapporte à un procédé de traitement d'un substrat solide comprenant les étapes suivantes :
a) On dispose d'un substrat solide couplé à un polyol, ledit polyol portant des groupements hydroxyles libres,
b) On greffe au moins un acide gras ayant une chaine aliphatique comprenant au moins 12 atomes de carbone sur ledit substrat solide couplé à un polyol par estérification d'au moins un groupement hydroxyle libre dudit polyol.

Dans un autre mode de réalisation, l'invention se rapporte à un procédé de traitement d'un substrat solide comprenant les étapes suivantes :
a) Couplage d'un polyol sur ledit substrat solide, ledit polyol conservant des groupements hydroxyles libres,
b) Greffage d'au moins un acide gras ayant une chaine aliphatique comprenant au moins 12 atomes de carbone sur ledit substrat solide couplé à un polyol par estérification d'au moins un groupement hydroxyle libre dudit polyol.

Ce traitement confère aux substrats solides traités des propriétés barrières à l'eau ainsi que le cas échéant des propriétés barrière au gaz, aux graisses et à la vapeur d'eau.

Le procédé selon l'invention peut être appliqué à tout substrat solide susceptible d'être couplé à un polyol linéaire. Dans la présente invention, on entend par les termes « substrat couplé à un polyol », un substrat lié à un polyol par une liaison forte qui n'est pas labile en présence d'eau et qui n'est pas sensible à la réaction d'estérification avec les acides gras. Cette liaison est ainsi typiquement plus forte que les liaisons hydrogènes (généralement définies comme des liaisons faibles) qui sont facilement déplaçables et donc sensibles à l'eau. Dans les procédés de la présente invention, le polyol est couplé au substrat solide par des liaisons covalentes ou poly-électrolytiques (poly électrostatiques). Ce couplage est effectué de telle façon que le polyol conserve des groupements hydroxyles libres. Les effets coopératifs des différentes interactions électrostatiques mises en jeu dans les liaisons de type poly-électrolytiques rendent ces liaisons stables en présence d'eau.
Par « liaisons poly-électrolytiques » ou « liaisons poly électrostatiques » sont désignées dans la description de la présente invention des liaisons de type ionique.

La demande internationale WO2009/083525 décrit le greffage d'acides gras sur des substrats solides enduits de PVA. Dans cet art antérieur, le PVA n'est pas lié au substrat solide par des liaisons fortes.

Par polyol, on entend toute molécule linéaire ou branchée comprenant au moins deux groupements hydroxyles. Dans un mode de réalisation, le polyol est un alditol.

Dans des modes de réalisation préférés, le polyol est choisi parmi les PVA, le glycerol, l'éryhtritol, le sorbitol, le xylitol, l'arabitol, le ribitol, le dulcitol, le mannitol, le volemitol, le maltitol, l'isomaltitol, la lactitol et les polymères polyols qui sont obtenus par réaction entre les polyols et les epoxydes d'alcenes comme l'épichlohydrine.

De préférence, le polyol est choisi parmi le PVA et le sorbitol.

Par « PVA », on entend l'alcool polyvinylique. Il est typiquement obtenu par polymérisation radicalaire de l'acétate de vinyle dans le méthanol, suivie de l'alcoolyse. En fonction du degré d'hydrolyse une certaine quantité d'acétate reste attachée à la chaîne de polymère. Le PVA est donc caractérisé par sa masse molaire et son degré d'hydrolyse.

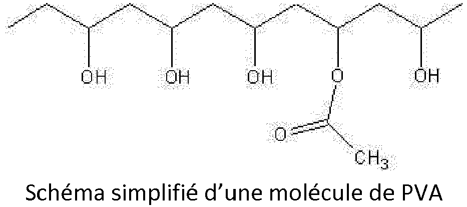

En ce qui concerne le PVA couplé au substrat solide, sa masse molaire et son degré d'hydrolyse n'ont pas d'importance particulière sur la stabilité du film formé contrairement aux films constitués de PVA libres. Le rôle de ce PVA est avant tout de fournir des groupements hydroxyle pouvant être estérifiés par des acides gras lors de la réaction de greffage ultérieure.

De préférence, le PVA présente un degré d'hydrolyse supérieur à 80%, 88% 85%, 90%, 95%, 98% et plus préférentiellement supérieur à 99%.

Le PVA pouvant conférer en lui-même des propriétés barrière, il peut être avantageux d'optimiser les propriétés barrière en mettant en oeuvre un PVA ayant une masse molaire suffisamment élevée pour conférer de telles propriétés.

De préférence, le PVA a une masse molaire (Mw) d'au moins 10 000, 15 000, 30 000, 50 000 ou d'au moins 75 000 g/mol.

Plus préférentiellement, le PVA a une masse molaire (Mw) comprise entre 13 000 et 300 000, 30 000 et 300 000, 50 000 et 200 000, 75 000 et 200 000, 100 000 et 200 000 g/mol.

La masse molaire Mw représente la masse molaire en poids, elle est de préférence déterminée par chromatographie d'exclusion diffusion.

Le couplage du polyol sur le substrat solide est effectué selon des techniques habituelles connues de l'homme du métier. Toute méthode de couplage peut être utilisée dans les procédés de la présente invention.

Le polyol joue le rôle d'une molécule bi-fonctionnelle dont les groupements hydroxyles permettent le greffage de l'acide gras et qui possède par ailleurs d'autres groupements capables d'effectuer sa fixation sur le support solide. La seule contrainte étant que le polyol conserve des groupements hydroxyles libres pour le greffage de l'acide gras.

Dans un premier mode de réalisation, le polyol est couplé au substrat solide directement par ses groupements hydroxyles par des liaisons fortes de type covalentes ou poly-électrolytiques (poly électrostatiques). Dans d'autres modes de réalisation, le polyol porte des groupements par l'intermédiaire desquels le polyol est couplé au substrat solide. De préférence, les hydroxyles du polyol portent des groupements par l'intermédiaire des quels le polyol est couplé au substrat solide. Le groupement par l'intermédiaire desquels le polyol est couplé au substrat solide est par exemple choisi parmi les groupements ionisables, les groupements anioniques, les groupements cationiques et les groupements silicate.

De la même façon, le polyol peut être constitué par le couplage entre un polymère non linéaire comme l'amidon et des polyols linéaires comme le PVA. Le couplage de l'amidon avec le PVA ou du sorbitol s'effectuant en présence d'épichlorhydrine et de soude. Il est possible alors d'utiliser la partie amidon de cette molécule hybride pour assurer la fixation sur un substrat solide. L'adhésion de l'amidon cationique sur des fibres papetières chargées négativement est ainsi bien connue dans le processus de fabrication du papier.

Dans certains modes de réalisation, le support solide porte des groupements permettant une liaison poly-électrolytique (poly électrostatique) ou covalente avec le polyol. Le support solide peut par exemple porter des groupements ionisables, des groupements anioniques, des groupements cationiques, des groupements silanol ou des groupements hydroxyles.

Dans un mode de réalisation, le substrat solide et le polyol sont porteurs de groupements ionisables. En milieu aqueux et à un pH donné, ces groupements ionisables permettent de coupler le substrat solide et le polyol par des liaisons poly-électrolytiques (poly électrostatiques).

Dans un mode de réalisation préféré, le substrat solide est porteur de charges négatives apportées par des groupements carboxyliques, sulfoniques ou phosphoriques. De telles fonctions peuvent être apportées à des supports organiques comme les fibres de cellulose ou de polymères par des réactions classiques de la chimie organique ou par des oxydations réalisées en milieu plasma. Des substrats présentant des fonctions acides plus faibles comme la silice, le verre, le talc, la montmorillonite ou la laponite qui sont ionisés négativement à pH 7 peuvent également être utilisés.

Avantageusement, le substrat solide porte un groupement anionique et le polyol est un PVA cationique.

Par PVA cationique, on entend un PVA dérivé avec des groupements cationiques. Ces produits sont bien connus de l'homme du métier (Moritani T&Yamauchi J, 1998a, Fatehi P, Xiao H, 2010, Liesiene J et al, 2005, Liesiene J, 2009) et sont disponibles commercialement (ex. le POVAL CM 318 de chez Kuraray). Ils peuvent être obtenus par copolymerisation du vinyle acétate et des monomères cationiques suivie d'alcoolyse du polyvinyle acétate cationique formé (Moritani T&Yamauchi J, 1998a) ou synthétisés par la réaction du PVA avec des réactants cationiques spécifiques, (Fatehi P, Xiao H, 2010, Liesiene J et al, 2005, Liesiene J, 2009) utilisés fréquemment pour cationiser l'amidon.

Dans un autre mode de réalisation préféré, le substrat solide porte un groupement cationique et le polyol est un PVA anionique.

Par PVA anionique, on entend un PVA dérivé avec des groupements anioniques. Ces produits sont bien connus de l'homme du métier (Moritani T& Kajitani K, 1997, Moritani T&Yamauchi J, 1998b) et sont disponibles commercialement. Kuraray dispose d'une gamme de PVA anioniques (carboxyliques) qui présente des degrés d'hydrolyse et masses moléculaires différents. Les groupements carboxyles greffés sur les chaines de PVA augmentent le caractère hydrophile du PVA et favorisent donc son emploi dans des applications usant les interactions ioniques.

Dans un autre mode de réalisation, le substrat solide porte des groupements silanol et le polyol est un PVA silicate, le substrat solide et le PVA silicate étant couplés par des liaisons siloxane. Le substrat solide est par exemple du verre, du quartz, des particules de silice, de talc, de montmorillonite ou de laponite.

Par PVA silicate, on entend un PVA dérivé avec des groupements silicate. Ces produits sont bien connus de l'homme du métier (Maruyama Hitoshi & Okaya Takuji, 1994a ; Maruyama Hitoshi & Okaya Takuji, 1994b) et sont disponibles commercialement. Kuraray commercialise des PVA silicate, sous le nom de Kuraray R- Polymeres (ex. le R-1130, le R-3109 ou le R-2105), connus pour leur capacité d'adhérer aux substrats inorganiques comme le verre. Ces PVA silicates sont utilisés également comme liants pour tous les types de silice couramment utilisés comme pigments dans les encres. Les PVA silicates possèdent également la propriété de se lier à d'autres substrats solides inorganiques comme l'aluminium ou l'acier dénués de fonctions SiOH.

Dans d'autres modes de réalisation, le substrat solide est couplé à un polyol par des liaisons covalentes.

Par exemple, le couplage de molécules de PVA sur des fibres de rayonne par un mécanisme de copolymérisation peut être réalisé selon des techniques connues de l'homme du métier (Horn et Simmons, 1965 ; Borbely et al. 2001). Le substrat est une fibre de rayonne couplée à du PVA par polymérisation radicalaire de polyacétate de vinyle sur ladite fibre suivie de la conversion du polyacétate de vinyle en PVA par hydrolyse. Le substrat solide couplé à un polyol peut donc être une fibre de rayonne couplée à du PVA. Cette technique peut être étendue à d'autres fibres naturelles ou synthétiques.

Des polyols tels que le PVA ou le sorbitol peuvent également être couplés à des fibres de rayonne ou de cellulose I (coton, lin, chanvre, fibres papetières de résineux ou de feuillus, vierges ou recyclées, whiskers de cellulose, cellulose micro cristalline) par couplage par de l'épichlorhydrine. Le couplage des fibres de rayonne s'effectuant en présence de soude, d'épichlorhydrine ainsi que de PVA ou de sorbitol.

Le substrat solide couplé à un polyol peut donc être une fibre de rayonne couplée à du PVA ou du sorbitol.

Dans un autre mode de réalisation, les polymères hydroxylés linéaires sont couplés sur une molécule intermédiaire comme l'amidon cationique. Cet amidon cationique est capable de se fixer grâce à ses charges positives sur des surfaces porteuses de charges négatives comme les fibres papetières. L'amidon cationique couplé à des polyols linéaires peut être utilisé dans la fabrication de papiers ou de cartons conférant des propriétés barrière à ces produits après réaction des polyols avec des acides gras.

Le substrat solide couplé au polyol est ensuite greffé en surface avec des acides gras.

Par greffage, on entend l'établissement de liaisons covalentes entre le polyol et les acides gras et plus particulièrement une estérification des groupements hydroxyle libres du polyol.

Ce greffage est effectué selon les méthodes décrites dans le brevet européen EP 1 007 202 et la demande internationale WO2009/083525.

En ce qui concerne le PVA, le greffage en surface des chaines de polyols linéaires par des acides gras se traduit au niveau moléculaire par un greffage séquentiel des molécules de polyols à la surface du film. On entend, par greffage séquentiel, un greffage dans lequel la molécule de polyol est constituée de segments alternativement greffés et non greffés. Les segments greffés forment une phase de polyols greffé qui est dirigée vers l'extérieur du support. Les segments non greffés forment également une phase mais dirigée vers l'intérieur du support. Le caractère continu ou pas de ces phases va dépendre à l'évidence de la densité de fixation des polyols à la surface du substrat solide. Le gonflement important lié à la réaction de greffage permet d'obtenir une phase continue pour les segments de polyols greffés malgré une densité de fixation relativement faible. Contrairement au cas de notre brevet précédent où on réalise une enduction continue de PVA, il n'est pas nécessaire ici de réaliser une couverture complète du substrat par des polyols.

Par « acide gras », on entend un acide organique composé d'une chaîne hydrocarbonée linéaire terminée à l'une de ses extrémités par un groupement carboxylique et à l'autre extrémité par un groupement méthyle. Les acides gras utilisés pour le greffage sont des acides gras ayant une chaine aliphatique comprenant au moins 12 atomes de carbone. De préférence, l'acide gras est un acide gras ayant une chaine aliphatique comprenant 12 à 30 atomes de carbone. Préférentiellement, l'acide gras est un acide gras ayant une chaine aliphatique comprenant 16 à 22 atomes de carbone. Préférentiellement, l'acide gras est un acide gras saturé. Dans un mode de réalisation préféré de l'invention, l'acide gras est choisi parmi l'acide stéarique, l'acide palmitique et l'acide béhénique. De préférence, le greffage est effectué avec de l'acide stéarique.

Typiquement, le greffage de l'acide gras sur le polyol s'effectue par estérification en phase hétérogène par les techniques de chimie chromatogénique (EP1007202). Cette technique utilise des réactifs du type chlorure d'acide mais en l'absence de solvant et de catalyseur pendant la phase de greffage. Dans les méthodes de chimie chromatogénique, le greffage est effectué à une température supérieure à la température de fusion du chlorure d'acide gras et inférieure à la température de fusion du polyol. Préférentiellement, le greffage est effectué entre 70°C et 185°C. Le greffage des chlorure d'acide gras est de préférence effectuée sous un balayage d'azote avec une légère dépression (900mbar) afin d'éliminer l'acide chlorhydrique formé pendant la réaction.

Dans un mode de réalisation préféré, le greffage est donc effectué en présence d'un chlorure d'acide gras ayant une chaine aliphatique comprenant au moins 12 atomes de carbone à l'état gazeux à une température comprise entre 70°C et 185°C.

Comme on l'a vu, une des caractéristiques de l'invention est le fait que la réaction ne se limite par aux hydroxyles présents à la surface mais pénètre à l'intérieur en acylant les hydroxyles de façon quantitative pour former une mince pellicule de polyols greffés. L'épaisseur de cette pellicule dépend naturellement des conditions de la réaction et notamment de sa stoechiométrie.

L'invention a également pour objet les substrats solides traités obtenus par les procédés décrits ci-dessus.

Un aspect particulier de l'invention concerne la fabrication et le traitement du papier afin de conférer à ce papier des propriétés barrières à l'eau ainsi que le cas échéant des propriétés barrière aux graisses, au gaz et à la vapeur d'eau.

Classiquement, la fabrication de papier ou de carton comprend une étape de floculation de fibres de cellulose avec de l'amidon cationique. Ces procédés de l'art antérieur peuvent être adaptés en employant un amidon cationique préalablement couplé à du un polyol et particulièrement à un PVA. Ce couplage entre le PVA et l'amidon cationique peut s'effectuer selon les techniques décrites ci-dessus. Dans un mode de réalisation préféré, le couplage entre l'amidon cationique et le PVA s'effectue en présence de soude et d'épichlorhydrine selon des techniques connues de l'homme du métier. L'amidon cationique couplé au PVA comprend de préférence de 10 à 50% de PVA de préférence l'amidon cationique couplé au PVA comprend au moins 20% de PVA en mol.

L'amidon cationique couplé à du PVA est ensuite utilisé pour la floculation des fibres de cellulose dans la fabrication du papier ou de carton. La quantité d'amidon cationique couplé à du PVA est ajustée afin d'utiliser la même charge cationique qu'avec un amidon cationique classique. L'amidon cationique est ajouté à une suspension de fibres de cellulose provoquant alors la floculation de ces dernières dans le procédé de fabrication de papier ou de carton. L'amidon cationique couplé à du PVA est employé dans une quantité d'au moins 1% en poids par rapport au poids de la suspension de fibres de cellulose, de préférence l'amidon cationique couplé au PVA est employé à au moins 3% en poids par rapport au poids de la suspension de fibres de cellulose.

Le papier ou le carton obtenu contient ainsi l'amidon couplé au PVA. De façon inattendue, les groupements hydroxyles de ce PVA restent accessibles en surface du papier/carton malgré le couplage du PVA à l'amidon. L'étape suivante est donc le traitement de ce papier/carton par greffage d'acides gras conférant ainsi des propriétés barrières.

L'invention se rapport donc à un procédé de fabrication et de traitement de papier ou de carton comprenant les étapes suivantes :
a) On dispose d'amidon cationique couplé à du PVA, ledit PVA portant des groupements hydroxyles libres ;
b) On procède à la fabrication de papier ou de carton par floculation de fibres de cellulose en présence de l'amidon cationique couplé à du PVA de l'étape précédente pour fabriquer du papier ou du carton comprenant de l'amidon cationique couplé à du PVA ;
c) On greffe au moins un acide gras ayant une chaine aliphatique comprenant au moins 12 atomes de carbone sur ledit substrat papier ou carton par estérification d'au moins un groupement hydroxyle libre dudit PVA.

L'invention se rapport donc à un procédé de fabrication et de traitement de papier ou de carton comprenant les étapes suivantes :
a) Couplage de PVA et d'amidon cationique;
b) Fabrication de papier ou de carton par floculation de fibres de cellulose en présence de l'amidon cationique couplé à du PVA de l'étape précédente ;
c) Greffage d'au moins un acide gras ayant une chaine aliphatique comprenant au moins 12 atomes de carbone sur ledit substrat papier ou carton par estérification d'au moins un groupement hydroxyle libre dudit PVA.

Le couplage du PVA à l'amidon cationique est de préférence effectué en présence de soude et d'un agent réticulant tel que l'épichlorhydrine.

Le greffage de l'acide gras est effectué selon les techniques décrites ci-dessus.

L'invention se rapporte également au papier ou carton obtenu par le procédé décrit ci-dessus.

### FIGURES

Figure 1 : Chaines de PVA ancrées sur une fibre et greffées par des acides gras

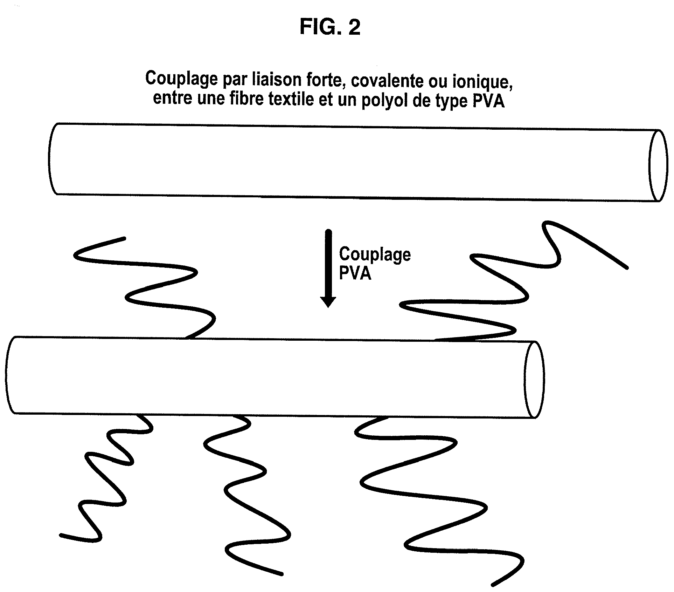

Figure 2 : Couplage par liaison forte, i.e. covalente ou ionique, entre une fibre textile et un polyol de type PVA

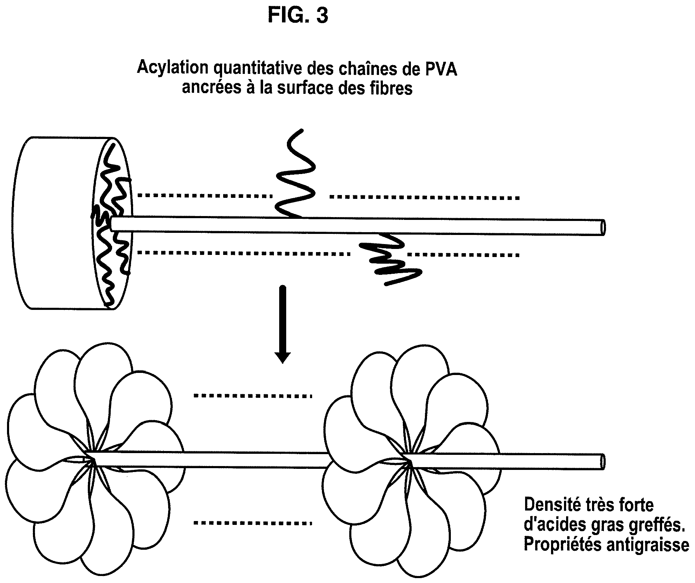

Figure 3 : Acylation quantitative des chaînes de PVA ancrées à la surface des fibres

### EXEMPLES

### Exemple 1

### Greffage chromatogénique des particules de silice carboxyméthylées porteuses de molécules de PVA cationique fixées par des liaisons ioniques

Le système choisi utilise comme substrat des particules de Silice greffées par des groupements carboxyméthyles (50µm Sep-Pak® Accell Plus CM Waters). Ces derniers sont donc anioniques à pH7 et créent autour des particules de silice une couronne de charges négatives. Par contre, ces particules étant dénuées de fonctions hydroxyles ne sont pas substrat pour la réaction de greffage d'acides gras par chromatogénie. Les particules de silice carboxyméthylée ont été donc enrobées par du PVA cationique et greffées avec acide gras stéarique par chromatogénie. Ainsi, 50 mg de particules de silice carboxyméthylée ont été ajoutées à 5 ml d'une solution à de PVA cationique 1% p/v(Poval CM 318, Kuraray). Après 30 min à pH 7, les particules sont décantées et rincées plusieurs fois à l'eau déionisée pour éliminer le PVA cationique n'ayant pas réagit. Après séchage, les particules sont caractérisées par analyse élémentaire. Elles sont ensuite brièvement incubées avec une solution de chlorure d'acide stéarique (Sigma-Aldrich) dans de l'éther de pétrole (éther de pétrole 100/140°C, Accros) à 2% puis décantées et placées à l'étuve pendant 5 min à 150°C. Les particules sont alors lavées de façon exhaustive à l'acétone puis caractérisées à nouveau par analyse élémentaire. Les résultats sont présentés sur le tableau suivant.

**Tableau 1 : Taux de carbone des particules de silice carboxymethylée avant et après greffage chromatogénique**

| **Type de particule** | **Taux de carbone %** |
|---|---|
| Silice CM initiale | 5,4 |
| Silice CM initiale incubée avec du PVA neutre | 5, 3 |
| Silice CM incubée avec du PVA cationique | 6,9 |
| Silice CM incubée avec du PVA cationique et greffé | 17,3 |

Les résultats obtenus indiquent très clairement que les particules de silice carboxyméthylée porteuses de charges anioniques négatives interagissent fortement avec les PVA cationiques statistiques en présentant une augmentation significative de leur taux de carbone (on passe après le greffage de 6,9 à 17,3 % en contenu de carbone). Aucune interaction n'est détectée avec le PVA neutre ce qui démontre bien que le caractère cationique est requis pour l'interaction. Ces résultats indiquent donc que les polymères de PVA cationiques ont bien été capables d'une part de s'ancrer sur la surface anionique des particules par des interactions de type poly-électrolytiques tout en restant substrat pour la réaction de greffage d'acides gras, malgré la restriction encore plus importante de leur degré de liberté.

### Exemple 2

### Greffage chromatogénique des formettes de papier floculées par de l'amidon cationique couplé à des molécules de PVA par couplage avec de l'épichlorhydrine

L'amidon cationique est une molécule industrielle largement utilisée pour la floculation des fibres de cellulose porteuses de charge négatives dans le processus de fabrication de papier. Les papiers ainsi obtenus peuvent ensuite être soumis au greffage chromatogénique mais on observe une limitation du taux de greffage d'acides gras et de l'hydrophobie résultante. Nous avons montré qu'il était possible d'améliorer ce taux de greffage et cette hydrophobie en couplant les chaines d'amidon cationique avec des chaines de polyols très réactif vis-à-vis de la réaction de chromatogénie.

Ainsi, 10 g de PVA Mowiol 4 98 (Kuraray) sont mélangés avec 20 g d'amidon cationique (Hicat 142, Roquette Frères, DS=0,04 et %N=0,37) afin de préparer une solution aqueuse à 30% (p/v). Le mélange est ensuite maintenu à 90 °C, jusqu'à la complète solubilisation des polymères, puis refroidie. Après refroidissement, on rajoute successivement la soude (13 ml à 10 M) puis l'épichlorhydrine (2 ml). La réaction est laissée se développer toute la nuit. Après, de l'eau déionisée est ajoutée et le gel formé est neutralisé avec de l'acide acétique (7 ml), lavé 3 à 4 fois avec de l'eau déionisée chaude puis broyé à l'aide d'un homogénéisateur haute pression (Manton Gaulin) jusqu'à l'obtention d'une solution homogène. Enfin, le produit obtenu est lyophilisé et le contenu en azote est déterminé par analyse élémentaire. Celui-ci s'élève à 0,28 %. Compte tenu du taux initial de 0,35% d'azote présent dans l'amidon cationique, il est possible de déduire que le produit de couplage comprend 76 % d'amidon cationique et 24 % de PVA.

L'amidon cationique porteur de chaines de PVA neutre est ensuite adsorbé sur des fibres de cellulose lors de la fabrication de formettes de papier. Les formettes sont ensuite séchées et greffées par chromatogénie avec du chlorure d'acide stéarique (C18) et l'aptitude au greffage des chaines de PVA fixées est mise en évidence par des mesures de grammage et de résistance à l'eau.

Les formettes ont été réalisées à partir d'une suspension de fibres de feuillus blanchies à 3g/l. Pour comparaison, on a réalisé des formettes contenant dans la masse 2% (g/g) d'amidon cationique par rapport à la matière fibreuse et des formettes contenant 3% (g/g) d'amidon cationique porteur de chaines de PVA. L'amidon cationique décoré de PVA a été ajouté à 3% afin d'avoir la même charge cationique que l'amidon cationique de départ. Par exemple, à 500 ml de suspension fibreuse doivent être ajoutés soit 0,6 ml à 5% (g/g) d'amidon cationique soit 0,9 ml à 5% (g/g) d'amidon cationique porteur de chaines de PVA.

Les formettes ont été greffées, après séchage, avec du chlorure d'acide stéarique par la méthode dite de transfert. Une feuille de papier dit émetteur est chargée en réactif par imprégnation avec une solution de chlorure d'acide stéarique à 2% dans l'éther de pétrole 100/140. Après évaporation complète du solvant, cette feuille est placée au contact de la feuille substrat et le sandwich ainsi constitué est placé pendant 10min dans une étuve chauffée à 150°C sous légère dépression (900 mbar) et sous balayage d'azote. Ces conditions permettent la diffusion du réactif de l'émetteur vers le substrat. La feuille substrat est ensuite séparée de la feuille émettrice et analysée. Avant le greffage, les formettes de papier ont été conditionnées à 105°C pendant 24h.

Le grammage ainsi que la résistance à l'eau (Cobb60) ont été mesurés avant et après greffage. Les résultats obtenus sont illustrés dans le tableau suivant.

**Tableau 2 : Grammages et valeurs de Cobb des formettes avant et après greffage chromatogénique**

| | formette amidon cationique | | formette amidon cationique porteur de chaines de PVA | |
|---|---|---|---|---|
| | Non greffée | Greffée C18 | Non greffé | Greffée C18 |
| Grammage (g/m²) | 97 | 99 | 100 | 106 |
| Absorption d'eau-Cobb₆₀ (g/m²) | Non mesurable | 14 | Non mesurable | 8 |

Le grammage des formettes est plus élevé quand on utilise l'amidon cationique décoré de chaines de PVA ce qui suggère une bonne rétention du polymère par les fibres. Après greffage, une augmentation importante du grammage est également observée dans le cas des formettes contenant de l'amidon cationique décoré de PVA. Les mesures d'absorption d'eau par le test Cobb renforcent ces observations. Ces résultats sont particulièrement intéressants parce qu'ils mettent en évidence non seulement le fait que les chaines d'amidon cationique porteuses de molécules de PVA ont gardées la capacité de l'amidon cationique de départ de s'ancrer sur les fibres de cellulose par le biais des interactions poly électrostatiques mais qu'elles sont de meilleurs substrats pour la réaction de greffage chromatogénique que les chaines d'amidon cationique et ceci grâce aux chaines de PVA fixées. Plus précisément, les chaines de PVA restent substrat pour la réaction de greffage malgré leur immobilisation par des liaisons covalentes sur des macromolécules d'amidon cationique et malgré leur association avec des fibres de cellulose.

### Exemple 3

### Greffage chromatogénique des fibres de rayonne porteuses de molécules de PVA greffées par un mécanisme de copolymérisation

Le greffage ou couplage de molécules de PVA sur des fibres de rayonne par un mécanisme de copolymérisation est réalisé selon des techniques connues de l'homme du métier (R.A. Horn and F.A. Simmons, 1965, E. Borbely and J. Erdelyi, K.C. Gupta and S. Sahoo, 2001).

Le greffage des chaînes d'alcool polyvinylique est obtenu par l'hydrolyse de poly (acétate de vinyle) préalablement greffé sur des fibres de cellulose II (rayonne) par copolymérisation selon un mécanisme radicalaire spécifique aux polymères vinyliques. Cette copolymérisation peut être maîtrisée et effectuée dans des conditions précises grâce à l'emploi de systèmes catalytiques convenablement choisis.

Dans un ballon tricols de 250ml immergé dans un bain d'eau à 50°C et équipé d'un agitateur mécanique, un condenseur à reflux et un thermomètre, on introduit successivement 100 ml de solution aqueuse de monomère d'acétate de vinyle (Sigma-Aldrich) à 8 %, les fibres de rayonne sous forme d'un ruban textile (6 g), l'initiateur le nitrate de cérium et d'ammonium (Sigma-Aldrich) et l'acide azotique (Sigma-Aldrich). On ajuste les quantités de nitrate de cérium et d'ammonium et d'acide azotique de façon à obtenir une concentration finale de 1.10⁻³ mole/l et 0,01 mole/l respectivement. Le temps de contact et donc de réaction a été de 40 minutes. La réaction a ensuite été arrêtée avec de l'acide L-ascorbique (Sigma-Aldrich) et le ruban de fibres de rayonne greffé par du poly-acétate de vinyle a été lavé à l'acétone et puis séché à 105°C.

Le poly (acétate de vinyle) greffé sur les fibres de rayonne est ensuite converti en alcool polyvinylique par hydrolyse basique en présence d'une solution hydro/méthanolique d'hydroxyde de potassium à 0,2 M. Les fibres de rayonne porteuses de PVA sont enfin lavées à l'eau déionisée et puis séchées. La prise de poids s'élève à 10% (soit 0,6 g). Après séchage, le ruban de fibres de rayonne décorées de PVA est greffé chromatogéniquement avec du chlorure d'acide stéarique. Parallèlement un ruban de fibres de rayonne témoin a été greffé. Le greffage a été réalisé par la méthode de transfert décrite dans l'exemple 2. Le ruban de fibres de rayonne a été caractérisé par IR en mode ATR après chaque traitement. La bande spécifique aux groupements ester à 1735 cm-1 à été considérée comme bande de référence pour le greffage par copolymérisation ainsi que pour le greffage chromatogénique des chaines d'alcool polyvinylique. Dans le spectre des fibres de rayonne greffées par copolymérisation avec du poly (acétate de vinyle) la bande des groupements ester est visible à 1735 cm-1 mais disparait du spectre après la dé acétylation des chaines de poly (acétate de vinyle) pour réapparaître dans le spectre des fibres de rayonne décorées de chaines d'alcool polyvinylique et greffées par chromatogénie. Par rapport aux fibres de rayonne témoin greffées, cette bande est plus intense et illustre d'une façon claire la capacité de l'alcool polyvinylique d'augmenter l'aptitude au greffage des fibres de rayonne. L'alcool polyvinylique reste donc substrat de greffage malgré son immobilisation sur les fibres de rayonne. Ces résultats sont également confirmés par la prise de poids de 3,6 g des fibres décorées de PVA après greffage chromatogénique, par rapport au ruban de fibres de rayonne de départ (soit une augmentation de 60% en poids).

### Exemple 4

### Greffage chromatogénique des fibres de rayonne porteuses de molécules de polyols de différents poids moléculaires fixées sur la surface par couplage avec de l'épichlorhydrine

Deux types de polyols ont été utilisés: l'alcool polyvinylique Mowiol 4 98 (Kuraray, **masse molaire 27000 g/mol)** et le Sorbitol (D-Sorbitol, Sigma-Aldrich, masse molaire 182 g/mol).

### 4.1. Le cas du Mowiol 4 98

On prépare d'abord une solution de Mowiol 4 98 dans la soude. Dans un ballon de 200 ml muni d'un agitateur mécanique on introduit 100ml de solution de Mowiol 4 98 à 20% (g/g). La solution est ensuite portée à 90°C pendant 1 h pour solubiliser le Mowiol. On refroidit alors le système à température ambiante et on ajoute la soude (20 ml à 10N). Les fibres de rayonne sous forme de ruban (2g) sont introduites dans un ballon bicols de 200mL en présence de 5 ml de soude 2N. Après 30 minutes d'agitation, l'épichlorhydrine (1ml) a été ajoutée, on laisse incuber 10 minutes et on ajoute la solution de PVA dans la soude. On laisse la réaction se développer pendant une nuit. Le ruban de fibres de rayonne est ensuite récupéré, lavé à l'eau déionisée afin d'enlever le Mowiol non greffé sur les fibres et puis séché. La prise de poids est de 15%. Le ruban est ensuite soumis au greffage chromatogénique avec du chlorure d'acide stéarique (C18) comme décrit dans l'exemple 2. Après greffage, le poids du ruban est de 3,8 g. Parallèlement un ruban de fibres de rayonne témoin a également été greffé avec du C18.

L'aptitude au greffage chromatogénique des chaines de Mowiol fixées sur les fibres de rayonne a été mise en évidence par analyse en IR-ATR. Le pic à 1735 cm-1 spécifique aux groupements ester a été considéré comme pic de référence pour le greffage chromatogénique des chaines d'alcool polyvinylique fixées sur les fibres de rayonne ainsi que pour le greffage chromatogénique des fibres de rayonne. Ce pic est à peine détectable dans le spectre des fibres de rayonne greffées C18 mais il est bien visible dans le spectre des fibres réticulées avec de l'alcool polyvinylique et puis greffées C18. En effet, la rayonne réagit chromatogéniquement avec les acides gras mais la quantité d'acide gras greffé reste cependant très faible. Par contre, une fois réticulées avec des chaines d'alcool polyvinylique, leur capacité d'être greffées augmente d'une façon significative, comme observé par IR-ATR. Encore une fois il a été démontré que les chaines d'alcool polyvinylique se comportent comme d'excellents substrats pour la réaction de greffage par chromatogénie même si elles sont fixées d'une manière stable sur un substrat solide.

### 4.2. Le cas du Sorbitol

On utilise le même protocole que dans l'exemple précédent en remplaçant le Mowiol par du sorbitol. La prise de poids après couplage est de 5% puis, après greffage chromatogénique, le poids du ruban est de 2,6g soit une augmentation de 30%. Le produit obtenu a été caractérisé de la même manière que précédemment, par spectroscopie IR, et avec les mêmes résultats.

### Exemple 5 Greffage chromatogénique d'une plaque de verre sur laquelle ont été ancrées des groupements PVA silicate.

Une plaque de verre du type lame pour microscope est incubée avec un 1mL d'une solution de PVA silicate (Kuraray R- Polymeres R-1130) à 2% P/V à laquelle on rajoute 100 µL d'acide acétique. La plaque est ensuite rincée à l'eau distillée, séchée et soumise au greffage chromatogénique avec du chlorure d'acide stéarique. Après traitement, la plaque est rincée avec du chloroforme et séchée. On vérifie que la plaque est bien restée hydrophobe après lavage au chloroforme. Une analyse en microscopie de force atomique révèle la présence d'une couche de 200 nm d'épaisseur au dessus de la plaque.

### REFERENCES

### Références brevet

WO2009/083525
EP 1 007 202

### Références bibliographiques

- Borbély E. and Erdélyi J., "Grafting of Industrial Cellulose Pulp with Vinyl acetate monomer by Ceric Ion Redox System as Initiator "
- Fatehi P, Xiao H, "Effect of cationic PVA characteristics on fiber and paper properties at saturation level of polymer adsorption",Carbohydrate Polymers 79, p. 423-428, 2010
- Gupta K.C. and Sahoo S., "Grafting of acrylonitrile and methyl methacrylate from their binary mixtures on cellulose using ceric ions" J. Appl. Polym. Sci., 79 (5), p. 767-778, 2001
- Horn R. A. and Simmonds F. A., 1965, "Treatement of kraft paperboards and a kraft pulp with acrylonitrile"
- Liesiene J et al, "Sorption of poly(vinyl alcohol) and its cationic derivative on silica oxide: effect of charge", Chemical Technology 2 (36) - ISSN 1392-1231 - p. 51 - 56, 2005
- Liesiene Jolanta, "Coating of Silica Surface with Poly(vinyl alcohol): Effect of the Surface Charge", 2009 - poster
- Maruyama Hitoshi & Okaya Takuji, "Study on the interaction between poly(vinyl alcohol) containing silanol groups at side chains and inorganic substances" Nippon Kagaku Kaishi (4), p. 365-70, 1994a
- Maruyama Hitoshi & Okaya Takuji, "Study on the composites of colloidal silica and poly(vinyl alcohol) modified with a small amount of silanol groups", Nippon Kagaku Kaishi (5), p. 450-5, 1994b
- Moritani T& Kajitani K, "Functional modification of poly(vinyl alcohol) by copolymerization: 1. Modification with carboxylic monomers", Polymer Vol. 38 No. 12, p. 2933-2945, 1997
- Moritani T&Yamauchi J, " Functional modification of poly(vinyl alcohol) by copolymerization III. Modification withcationic monomers", Polymer Vol. 39 No. 3, p. 559-572, 1998a
- Moritani T&Yamauchi J, "Functional modification of poly(vinyl alcohol) by copolymerization: II. Modification with a sulfonate monomer", Polymer Vol. 39 No. 3, p. 553-557, 1998b

## Revendications

1. Procédé de traitement d'un substrat solide comprenant les étapes suivantes :
a) On dispose d'un substrat solide couplé à un polyol linéaire par des liaisons covalentes ou ionique ledit polyol portant des groupements hydroxyles libres,
b) On greffe au moins un acide gras ayant une chaine aliphatique comprenant au moins 12 atomes de carbone sur ledit substrat solide couplé à un polyol par estérification d'au moins un groupement hydroxyle libre dudit polyol.

2. Procédé de traitement d'un substrat solide selon l'une des revendications 1-2, dans lequel le polyol est choisi parmi le PVA, le sorbitol, les alditols et les oligomères d'alditols.

3. Procédé de traitement d'un substrat solide selon l'une des revendications précédentes, dans lequel le substrat solide et le polyol portent des groupements ionisables, le substrat solide et le polyol étant couplés par des liaisons ioniques entre lesdits groupements ionisables.

4. Procédé de traitement d'un substrat solide selon la revendication 3, dans lequel le substrat solide porte un groupement anionique et le polyol est un PVA cationique.

5. Procédé de traitement d'un substrat solide selon la revendication 3, dans lequel le substrat solide porte un groupement cationique et le polyol est un PVA anionique.

6. Procédé de traitement d'un substrat solide selon l'une des revendications 1-2, dans lequel le substrat solide porte des groupements silanol et le polyol est un PVA silicate, le substrat solide et le PVA silicate étant couplés par des liaisons siloxane.

7. Procédé de traitement d'un substrat solide selon la revendication 6, dans lequel le substrat solide est du verre couplé à du PVA silicate.

8. Procédé de traitement d'un substrat solide selon l'une des revendications 1-2, dans lequel le substrat est une fibre de rayonne couplée à du PVA par polymérisation radicalaire de polyacétate de vinyle sur ladite fibre suivie de la conversion du polyacétate de vinyle en PVA par hydrolyse.

9. Procédé de traitement d'un substrat solide selon l'une des revendications 1-2, dans lequel le substrat est une fibre de rayonne couplée à du PVA.

10. Procédé de traitement d'un substrat solide selon l'une des revendications 1-2, dans lequel le substrat est une fibre de rayonne couplée à du sorbitol.

11. Procédé de traitement d'un substrat solide selon l'une des revendications précédentes, dans lequel l'acide gras est choisi parmi l'acide stéarique, l'acide palmitique et l'acide béhénique.

12. Procédé de traitement d'un substrat solide selon l'une des revendications précédentes, dans lequel le greffage de l'acide gras est effectué par estérification en phase hétérogène en présence d'un chlorure d'acide ayant une chaine aliphatique comprenant au moins 12 atomes de carbone.

13. Substrat solide traité susceptible d'être obtenu par le procédé selon l'une des revendications précédentes.

14. Procédé de fabrication et de traitement de papier ou de carton comprenant les étapes suivantes :
a) On dispose d'amidon cationique couplé par liaison covalente ou ionique à du PVA, ledit PVA portant des groupements hydroxyles libres ;
b) On procède à la fabrication de papier ou de carton par floculation de fibres de cellulose en présence de l'amidon cationique couplé à du PVA de l'étape précédente pour fabriquer du papier ou du carton comprenant de l'amidon cationique couplé à du PVA;
c) On greffe au moins un acide gras ayant une chaine aliphatique comprenant au moins 12 atomes de carbone sur ledit substrat papier ou carton par estérification d'au moins un groupement hydroxyle libre dudit PVA.

15. Procédé de fabrication et de traitement de papier ou de carton selon la revendication 14, dans lequel le greffage de l'acide gras est effectué par estérification en phase hétérogène en présence d'un chlorure d'acide ayant une chaine aliphatique comprenant au moins 12 atomes de carbone.

## Patentansprüche

1. Verfahren zur Behandlung eines festen Substrats, umfassend die Schritte:
a) Vorsehen eines festen Substrats, das über kovalente oder ionische Bindungen mit einem linearen Polyol gekuppelt ist, wobei das Polyol freie Hydroxylgruppen aufweist,
b) Aufpfropfen mindestens einer Festsäure mit einer aliphatischen Kette, die mindestens 12 Kohlenstoffatome umfasst, auf das mit einem Polyol gekuppelte feste Substrat durch Verestern mindestens einer freien Hydroxylgruppe des Polyols.

2. Verfahren zur Behandlung eines festen Substrats nach einem der Ansprüche 1 - 2, wobei das Polyol aus PVA, Sorbit, den Alditolen und Alditololigomeren gewählt ist.

3. Verfahren zur Behandlung eines festen Substrats nach einem der vorstehenden Ansprüche, wobei das feste Substrat und das Polyol ionisierbare Gruppen aufweisen, wobei das feste Substrat und das Polyol über ionische Bindungen zwischen den ionisierbaren Gruppen gekuppelt sind.

4. Verfahren zum Behandeln eines festen Substrats nach Anspruch 3, wobei das feste Substrat eine anionische Gruppe aufweist und das Polyol ein kationischer PVA ist.

5. Verfahren zum Behandeln eines festen Substrats nach Anspruch 3, wobei das feste Substrat eine kationische Gruppe aufweist und das Polyol ein anionischer PVA ist.

6. Verfahren zur Behandlung eines festen Substrats nach einem der Ansprüche 1 - 2, wobei das feste Substrat Silanolgruppen aufweist und das Polyol ein PVA-Silikat ist, wobei das feste Substrat und das PVA-Silikat über Siloxanbindungen gekuppelt sind.

7. Verfahren zur Behandlung eines festen Substrats nach Anspruch 6, wobei das feste Substrat mit PVA-Silikat gekuppeltes Glas ist.

8. Verfahren zur Behandlung eines festen Substrats nach einem der Ansprüche 1 - 2, wobei das Substrat eine Kunstseidenfaser ist, die mit PVA gekuppelt worden ist durch radikalisches Polymerisieren von Vinylpolyacetat auf der Faser, gefolgt durch Umwandeln von Vinylpolyacetat in PVA durch Hydrolyse.

9. Verfahren zur Behandlung eines festen Substrats nach einem der Ansprüche 1 - 2, wobei das Substrat eine mit PVA gekuppelte Kunstseidenfaser ist.

10. Verfahren zur Behandlung eines festen Substrats nach einem der Ansprüche 1 - 2, wobei das Substrat eine mit Sorbit gekuppelte Kunstseidenfaser ist.

11. Verfahren zur Behandlung eines festen Substrats nach einem der vorstehenden Ansprüche, wobei die Fettsäure gewählt ist aus Stearinsäure, Palmitinsäure und Behensäure.

12. Verfahren zur Behandlung eines festen Substrats nach einem der vorstehenden Ansprüche, wobei die Aufpfropfung der Fettsäure durch Veresterung in heterogener Phase in Gegenwart eines Säurechlorids mit einer aliphatischen Kette, die mindestens 12 Kohlenstoffatome umfasst, erfolgt.

13. Behandeltes festes Substrat, das sich im Verfahren nach einem der vorstehenden Ansprüche erhalten lässt.

14. Verfahren zum Herstellen und Behandeln von Papier oder Karton, umfassend die Schritte:
a) Vorsehen von kationischer Stärke, die über kovalente oder ionische Bindungen mit PVA gekuppelt ist, wobei der PVA freie Hydroxylgruppen umfasst;
b) Herstellen von Papier oder Karton durch Ausflocken von Cellulosefasern in Gegenwart der mit PVA gekuppelten kationischen Stärke aus dem vorigen Schritt, um Papier oder Karton herzustellen, die mit PVA gekuppelte kationische Stärke umfassen;
c) Aufpfropfen mindestens einer Festsäure mit einer aliphatischen Kette, die mindestens 12 Kohlenstoffatome umfasst, auf das Papier- bzw. Kartonsubstrat durch Verestern mindestens einer freien Hydroxylgruppe des PVA.

15. Verfahren zum Herstellen und Behandeln von Papier oder Karton nach Anspruch 14, wobei die Aufpfropfung der Fettsäure durch Veresterung in heterogener Phase in Gegenwart eines Säurechlorids mit einer aliphatischen Kette, die mindestens 12 Kohlenstoffatome umfasst, erfolgt.

## Claims

1. Method of treating a solid substrate comprising the steps of:
a) a solid substrate is coupled to a linear polyol by covalent or ionic bonds, wherein the polyol carries free hydroxyl groups,
b) at least one fatty acid having an aliphatic chain comprising at least 12 carbon atoms is grafted onto the solid substrate coupled to a polyol by esterification of at least one free hydroxyl group of the polyol.

2. Method of treating a solid substrate according to one of the claims 1-2, wherein the polyol is selected from PVA, sorbitol, alditols and alditol oligomers.

3. Method of treating a solid substrate according to one of the preceding claims, wherein the solid substrate and the polyol carry ionizable groups, and wherein the solid substrate and the polyol are coupled by ionic bonds between the ionizable groups.

4. Method of treating a solid substrate according to claim 3, wherein the solid substrate carries an anionic group and the polyol is a cationic PVA.

5. Method of treating a solid substrate according to claim 3, wherein the solid substrate carries a cationic group and the polyol is an anionic PVA.

6. Method of treating a solid substrate according to one of the claims 1-2, wherein the solid substrate carries silanol groups and the polyol is a PVA silicate, and wherein the solid substrate and the PVA silicate are coupled by siloxane bonds.

7. Method of treating a solid substrate according to claim 6, wherein the solid substrate is glass coupled with PVA silicate.

8. Method of treating a solid substrate according to one of the claims 1-2, wherein the substrate is a rayon fiber coupled to PVA by radical polymerization of polyvinyl acetate on the fiber followed by the conversion of the polyacetate of PVA vinyl by hydrolysis.

9. Method of treating a solid substrate according to one of the claims 1-2, wherein the substrate is a rayon fiber coupled to PVA.

10. Method of treating a solid substrate according to one of the claims 1-2, wherein the substrate is a rayon fiber coupled to sorbitol.

11. Method of treating a solid substrate according to one of the preceding claims, wherein the fatty acid is selected from stearic acid, palmitic acid and behenic acid.

12. Method of treating a solid substrate according to one of the preceding claims, wherein the grafting of the fatty acid is carried out by heterogeneous phase esterification in the presence of an acid chloride having an aliphatic chain comprising at least 12 carbon atoms.

13. Treated solid substrate obtainable by the method according to one of the preceding claims.

14. Method of manufacturing and processing paper or board comprising the steps of:
a) Coupling cationic starch to PVA by a covalent or ionic bond, wherein the PVA carries free hydroxyl groups;
b) Paper or paperboard is produced by flocculation of cellulose fibers in the presence of the PVA-coupled cationic starch of the preceding step to produce paper or paperboard comprising cationic starch coupled with PVA;
c) At least one fatty acid having an aliphatic chain comprising at least 12 carbon atoms is grafted onto the paper or paperboard substrate by esterification of at least one free hydroxyl group of the PVA.

15. Method of manufacturing and treating paper or paperboard according to claim 14, wherein the grafting of the fatty acid is carried out by heterogeneous phase esterification in the presence of an acid chloride having an aliphatic chain comprising at least 12 carbon atoms.
